# EUROPEAN PATENT SPECIFICATION

(11) **EP 3 078 510 B1**
(45) Date of publication and mention of the grant of the patent: **22.11.2017**
(21) Application number: 16161080.3
(22) Date of filing: 18.03.2016
(51) Int. Cl.: B60C 15/06, B60C 11/01, B60C 3/04

(54) **PNEUMATIC TIRE FOR TWO-WHEELED VEHICLE**
LUFTREIFEN FÜR EIN ZWEIRÄDRIGES FAHRZEUG
PNEUMATIQUE POUR VÉHICULE À DEUX ROUES

(30) Priority: 06.04.2015 JP 2015077310
(43) Date of publication of application: 12.10.2016
(73) Proprietor: Sumitomo Rubber Industries, Ltd., Kobe-shi, Hyogo 651-0072 (JP)
(72) Inventor: ISAKA, Wataru, Kobe-shi,, Hyogo 651-0072, (JP)
(74) Representative: TBK

(56) References cited:
- EP-A1- 0 484 075
- EP-A2- 0 453 295

## Description

### BACKGROUND OF THE INVENTION

### Field of the Invention

The present invention relates to a pneumatic tire for a two-wheeled vehicle.

### Description of Background Art

In order to achieve both good stability and good absorbability, various studies have been made regarding the rigidity of the side part. JP H10-109507 A describes an example of such studies.

EP 0 453 295 A2 discloses a pneumatic tire according to the preamble of claim 1.

EP 0 484 075 relates to a motorcycle radial tyre which comprises a carcass having at least one ply of radially arranged organic fibre cords turned up around a pair of bead cores, the radial height of the radially outer edge of the carcass turned up portions being more than 0.6 and less than 1.2 times the radial height of the tread edges, a first belt comprising one cord or a plurality of parallel cords wound spirally so that the windings thereof are laid at small angles with respect to the tyre equator, a second belt comprising one ply of parallel organic fibre cords laid at at angle of 10 to 30 degrees with respect to the tyre equator, a bead apex made of rubber having a JIS(A) hardness of 65 to 75 disposed between the main portion and each turned up portion of the carcass, and the radial height of the radially outer edge of the bead apex from the bead base line being more than 0.5 and less than 1.2 times the radial height of the tread edges.

### SUMMARY OF THE INVENTION

According to one aspect of the present invention, a pneumatic tire for a two-wheeled vehicle includes a tread having a tread surface, a pair of side walls extending from the tread substantially inward in a radial direction such that the pair of side walls has a pair of side surfaces extending from edges of the tread surface substantially inward in the radial direction, respectively, and a pair of beads positioned on inner sides of the side walls in an axial direction, respectively, and each including a core and an apex extending from the core outward in the radial direction. When the pneumatic tire is mounted on a normal rim and is filled with air to a normal internal pressure, each of the side surfaces has a reference position which corresponds to a radial direction outer edge of each of the side surfaces in contact with the normal rim, and a reference line which is a straight line passing through the reference position and an edge of the tread surface such that the reference line is in contact with the normal rim at the reference position and that each of the side surfaces extends along the reference line in a zone between the reference position and a respective one of the edges of the tread surface, and the pneumatic tire satisfies that an absolute value of an angle formed by the reference line with respect to a bead base line is in a range of 45 degrees to 75 degrees and that a ratio of a radial direction height from the reference position to an outer edge of the apex, with respect to a radial direction height from the reference position to the edge of the tread surface, is 0.5 or more.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 illustrates a cross-sectional view in which a portion of a pneumatic tire according to an embodiment of the present invention is illustrated;
Fig. 2 illustrates an enlarged cross-sectional view in which a portion of the tire of Fig. 1 is illustrated;
Fig. 3 is a schematic diagram in which a profile of a side surface of the tire of Fig. 1 is illustrated; and
Fig. 4 illustrates an enlarged cross-sectional view in which a portion of a conventional pneumatic tire is illustrated.

### DETAILED DESCRIPTION OF THE EMBODIMENTS

The embodiments will now be described with reference to the accompanying drawings, wherein like reference numerals designate corresponding or identical elements throughout the various drawings.

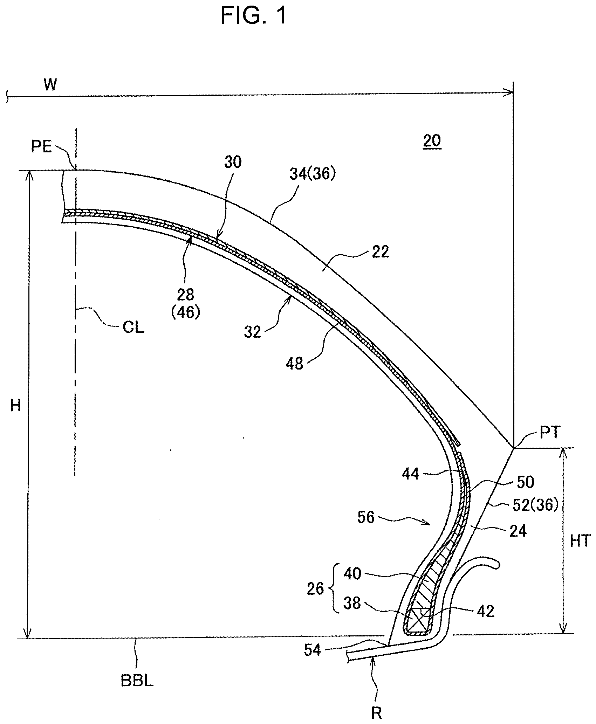

Fig. 1 illustrates a pneumatic tire 20. In Fig. 1, an up-down direction is a radial direction of the tire 20; a left-right direction is an axial direction of the tire 20; and a direction perpendicular to a paper surface is a circumferential direction of the tire 20. In Fig. 1, a one-dotted chain line (CL) indicates an equatorial plane of the tire 20. The tire 20 has a shape that is symmetrical with respect to the equatorial plane except for a tread pattern.

In Fig. 1, a solid line (BBL) is a bead base line. The bead base line is a line that defines a rim diameter of the rim (R) (see JATMA). The bead base line extends in the axial direction.

In Fig. 1, the tire 20 is mounted to a rim (R). The rim (R) is a normal rim. The tire 20 is filled with air. As a result, an internal pressure of the tire 20 is adjusted to a normal internal pressure.

In an embodiment of the present invention, unless specifically mentioned, dimensions and angles of members of the tire 20 are measured in a state in which the tire 20 is mounted to a normal rim and air is filled in the tire 20 such that the tire 20 has a normal internal pressure. During measurement, a load is not applied to the tire 20.

The normal rim in the present specification means a rim prescribed in standards on which the tire 20 is based. A "Standard Rim" in JATMA standards, a "Design Rim" in TRA standards, and a "Measuring Rim" in ETRTO standards are normal rims.

The normal internal pressure in the present specification means an internal pressure prescribed in standards on which the tire 20 is based. A "Highest Air Pressure" in the JATMA standards, a "Maximum Value" published in "Tire Load Limits at Various Cold Inflation Pressures" in the TRA standards, and an "Inflation Pressure" in the ETRTO standards are normal internal pressures.

The tire 20 includes a tread 22, a pair of side walls 24, a pair of bead 26, a carcass 28, a band 30 and an inner liner 32. The tire 20 is of a tubeless type. The tire 20 is mounted to a two-wheeled vehicle. In particular, the tire 20 is for a rear wheel of a two-wheeled vehicle.

The tread 22 has a shape that is convex outward in the radial direction. The tread 22 has a tread surface 34 that is in contact with a road surface. The tread surface 34 is a portion of an outer surface 36 of the tire 20. The tread 22 is formed of a crosslinked rubber that is excellent in wear resistance, heat resistance and grip performance. Grooves are not engraved on the tread 22. It is also possible that grooves are engraved on the tread 22 to form a tread pattern.

The two-wheeled vehicle turns by inclining a vehicle body thereof. From a point of view of being easy to turn, the tread 22 has a small curvature radius.

In the tire 20, during straight traveling, a portion of the equatorial plane of the tread 22 (center zone) is in contact with the ground. During turning traveling, rather than the center zone, a zone on an axial direction outer side is in contact with the ground. A rider often turns a two-wheeled vehicle by inclining the two-wheeled vehicle to a limit. This state is referred to as "full bank." In full bank, a portion of the tread 22 on an edge (shoulder zone) is in contact with the ground. A zone between the center zone and the shoulder zone is referred to as a middle zone.

In Fig. 1, a reference numeral symbol PT indicates an edge of the tread surface 34. A double-headed arrow (W) indicates an axial direction length from the edge (PT) on one side to the edge (PT) on the other side. The length (W) is an axial direction width of the tread 22 and is a maximum width of the tire 20. The tire 20 is configured such that the axial direction width is maximized at the edge (PT) of the tread surface 34.

In Fig. 1, a reference numeral symbol PE indicates an intersection point between the tread surface 34 and the equatorial plane. The intersection point (PE) is referred to as an equator of the tire 20. A double-headed arrow (H) indicates a cross-sectional height of the tire 20. The height (H) is a radial direction height from the bead base line to the equator (PE). A double-headed arrow (HT) indicates a radial direction height from the bead base line to the edge (PT) of the tread surface 34.

In the tire 20, a ratio of the cross-sectional height (H) with respect to the maximum width (W), that is, an aspect ratio, is 0.5 or more. As a result, the tread 22 can have a small curvature radius. The small curvature radius contributes to camber thrust. The tire 20 is excellent in turning performance. The aspect ratio is 0.8 or less. As a result, a too small curvature radius is prevented. In the tire 20, during straight traveling, the center zone is sufficiently in contact with the grounded. The tire 20 is excellent in traction performance.

In the tire 20, a ratio of the height (HT) with respect to the cross-sectional height (H) is 0.4 or more. As a result, a too small curvature radius is prevented. In the tire 20, during straight traveling, the center zone is sufficiently in contact with the grounded. The tire 20 is excellent in traction performance. The ratio is 0.6 or less. As a result, the tread 22 can have a small curvature radius. The small curvature radius contributes to camber thrust. The tire 20 is excellent in turning performance.

Each of the side walls 24 extends from the tread 22 substantially inward in the radial direction. The side walls 24 are formed of a crosslinked rubber that is excellent in cut resistance and weather resistance. The side walls 24 are positioned on outer sides of the carcass 28 in the axial direction. The side walls 24 prevent the carcass 28 from being damaged.

The beads 26 are respectively positioned on inner sides of the side walls 24 in an axial direction. As illustrated in the drawings, when the tire 20 is mounted to the rim (R), the beads 26 are positioned close to the rim (R). The beads 26 each include a core 38 and an apex 40.

The core 38 is in a ring shape and includes a wound non-stretchable wire. A typical material of the wire is steel.

The apex 40 extends from the core 38 outward in the radial direction. As illustrated in the drawings, the apex 40 tapers from a bottom 42 toward an outer edge 44. The apex 40 is formed of a high-hardness crosslinked rubber.

The carcass 28 includes a carcass ply 46. The carcass ply 46 extends between the beads 22 on both sides. The carcass ply 46 extends along the treads 22 and the side walls 24. The carcass ply 46 is folded back around the core 38 from an inner side toward an outer side in the axial direction. Due to the folding back, a main part 48 and a folding-back part 50 are formed in the carcass ply 46. An edge of the folding-back part 50 of the tire 20 is positioned close to the edge (PT) of the tread surface 34 in the radial direction.

The carcass ply 46 is formed of a large number of parallel-aligned cords and a topping rubber. An absolute value of an angle formed by each of the cords with respect to the equatorial plane ranges from 75 degrees to 90 degrees. In other words, the carcass 28 has a radial structure. The cords are formed of organic fibers. Examples of preferred organic fibers include polyester fibers, nylon fibers, rayon fibers, polyethylene naphthalate fibers and aramid fibers. The carcass 28 may also be formed from two or more layers of the carcass plies 46.

The band 30 is positioned on a radial direction inner side of the tread 22. The band 30 is laminated with the carcass 28. The band 30 reinforces the carcass 28. Although not illustrated in the drawings, the band 30 is formed of cords and a topping rubber. The cords are spirally wound. The band 30 has a so-called jointless structure. The cords extend substantially in the circumferential direction. An angle of each of the cords with respect to the circumferential direction is 5 degrees or less, and further, 2 degrees or less. The band 30 contributes to the rigidity of the tire 20 in the radial direction. The band 30 suppresses an influence of a centrifugal force that acts on the tire during traveling. The tire 20 is excellent in high-speed stability. The cords are formed of organic fibers. Examples of preferred organic fibers include nylon fibers, polyester fibers, rayon fibers, polyethylene naphthalate fibers and aramid fibers.

The inner liner 32 is positioned on an inner side of the carcass 28. The inner liner 32 is bonded to an inner surface of the carcass 28. The inner liner 32 is formed of a crosslinked rubber that is excellent in air impermeability. A typical base material rubber of the inner liner 32 is a butyl rubber or a halogenated butyl rubber. The inner liner 32 maintains the inner pressure of the tire 20.

The outer surface 36 of the tire 20 includes side surfaces 52 in addition to the tread surface 34. In other words, the outer surface 36 includes the tread surface 34 and the pair of the side surfaces 52. In the tire 20, of the outer surface 36, a zone from the edge (PT) of the tread surface 34 to a toe 54 of the tire 20 is referred to as a side surface 52. The side surfaces 52 respectively extend from the edges (PT) of the tread surface 34 substantially inward in the radial direction.

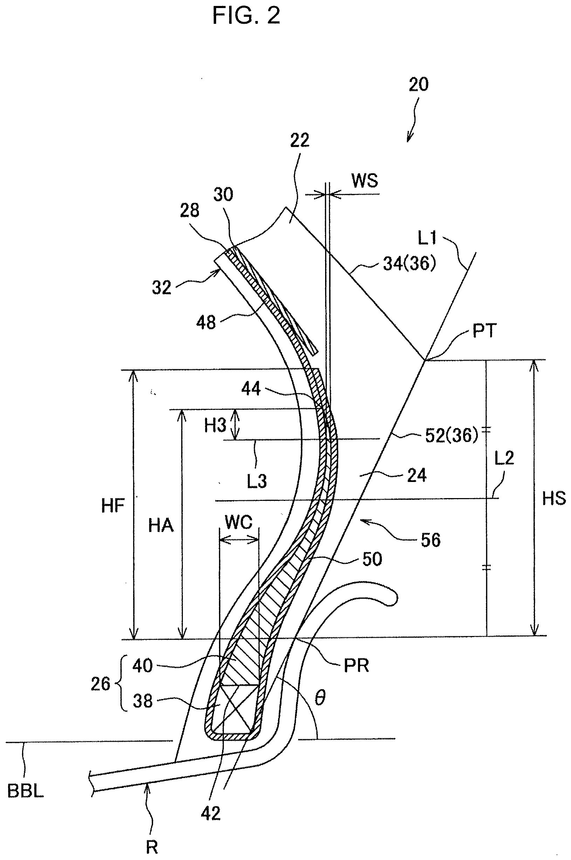

Fig. 2 illustrates a portion of the side wall 24 (hereinafter, referred to as a side part 56) of the tire 20 of Fig. 1. As illustrated in Fig. 2, a portion of the side surface 52 is in contact with the rim (R). In Fig. 2, a reference numeral symbol PR indicates a specific position on the side surface 52. The position (PR) corresponds to a radial direction outer edge of a contact surface between the side surface 52 and the rim (R). In the present application, the position (PR) is referred to as a reference position. The reference position (PR) is specified in a state in which a load is applied to the tire 20.

In Fig. 2, a solid line (L1) is a straight line passing through the reference position (PR) and the edge (PT) of the tread surface 34. In the present application, the straight line (L1) is referred to as a reference line. As illustrated in Fig. 2, the reference line (L1) is in contact with the rim (R) at the reference position (PR). The reference line (L1) extends outward in the radial direction so as to spread toward an outer side in the axial direction. The reference line (L1) obliquely intersects the bead base line.

In the tire 20, in a zone (hereinafter, referred to as a reference zone) between the edge (PT) of the tread surface 34 and the reference position (PR), the side surface 52 extends along the reference line (L1). In other words, in the reference zone, the side surface 52 has a shape of a straight line.

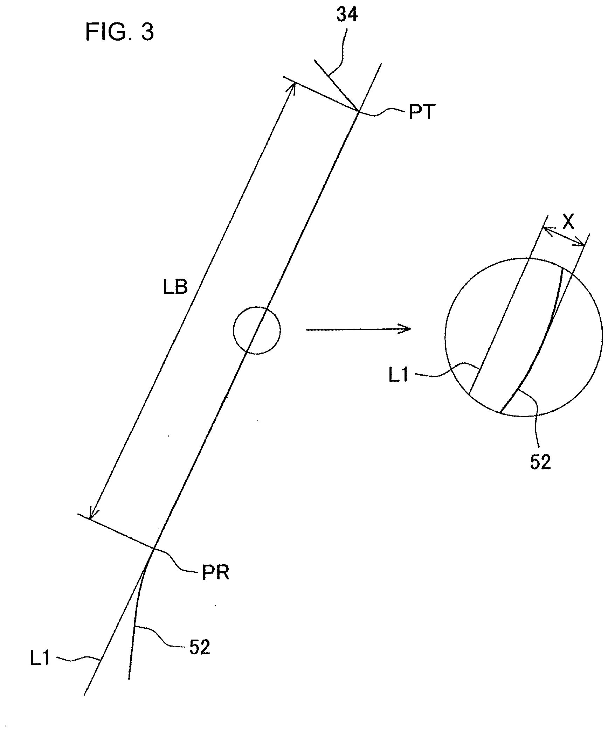

Fig. 3 schematically illustrates a profile of the side surface 52 together with the reference line (L1). As illustrated in Fig. 3, the side surface 52 may be deviate from the reference line (L1).

In Fig. 3, a double-headed arrow (X) indicates a distance from the reference line (L1) to the side surface 52. The distance (X) is a deviation amount of the side surface 52 from the reference line (L1). A double-headed arrow (LB) indicates a length of the reference line (L1) from the edge (PT) of the tread surface 34 to the reference position (PR).

In the present application, the above-described "shape of a straight line" means that a maximum value of the deviation amount (X) is 0.05 times or less of the length (LB). In other words, in the reference zone, when the maximum value of the deviation amount (X) is 0.05 times or less of the length (LB), the side surface 52 has a shape of a straight line.

In the tire 20, in the reference zone, the side surface 52 extends along the reference line (L1) that obliquely intersects the bead base line and is in contact with the rim (R). In the side part 56 that has the side surface 52, an action resisting a force in the compression direction is smaller than that in the side part 4 of the conventional tire 2. The side part 56 is easier to flex than the side part 4 of the conventional tire 2. In addition, the side surface 52 has a shape of a straight line. Therefore, in the reference zone, as compared to a side part of a tire having a side surface that is curved outwardly or inwardly in the axial direction, the side part 56 of the tire 20 as a whole flexibly flexes. The side surface 52 of the tire 20 contributes to flexure while properly maintaining the rigidity of the side part 56. In the tire 20 having the side surface 52, absorbability is improved while appropriate stability is maintained.

In Fig. 2, an angle (θ) indicates a intersection angle formed by the reference line (L1) with respect to the bead base line. The intersection angle (θ) affects the absorbability and the stability.

In the tire 20, an absolute value of the intersection angle (θ) is 75 degrees or less. As a result, the side surface 52 effectively contributes to the flexure of the side part 56. The tire 20 is excellent in absorbability. From this point of view, the absolute value of the intersection angle (θ) is preferably 70 degrees or less and more preferably 65 degrees or less.

In the tire 20, the absolute value of the inclination angle (θ) is 45 degrees or more. As a result, the side surface 52 effectively contributes to the reinforcement of the side part 56. In the tire 20, the stability is properly maintained. From this point of view, the absolute value of the inclination angle (θ) is preferably 50 degrees or more and more preferably 55 degrees or more.

In Fig. 2, a double-headed arrow (HS) indicates a radial direction height from the reference position (PR) to the edge (PT) of the tread surface 34. The height (HS) is also a radial direction length of the reference zone. A double-headed arrow (HA) indicates a radial direction height from the reference position (PR) to the outer edge 44 of the apex 40. A straight line (L2) extends in the axial direction. The straight line (L2) passes through a radial direction center of the reference zone.

The side surface 52 of the tire 20 affects the stability while contributes to the absorbability. The bead 26 is positioned near the rim (R). Therefore, in a radial direction inner side portion of the reference zone, sufficient rigidity is ensured. On the other hand, in a radial direction outer side portion of the reference zone, there is a risk that the rigidity is insufficient. In particular, in the tire 20, in the reference zone, the side surface 52 has a shape of a straight line. Therefore, the rigidity of the radial direction outer side portion of the reference zone has a surprisingly large influence on the stability.

In the tire 20, a position of the outer edge 44 of the apex 40 in the radial direction coincides with a position of the straight line (L2), or, the outer edge 44 of the apex 40 is positioned on a radial direction outer side of the straight line (L2). In other words, a ratio of the height (HA) with respect to the height (HS) is 0.5 or more. The apex 40 has an appropriate height. As described above, the apex 40 is formed of a high-hardness crosslinked rubber. The apex 40 of the tire 20 effectively contributes to the rigidity of the side part 56, in particular, the rigidity of a radial direction outer side portion of the reference zone. In the tire 20, despite that the side surface 52, which extends along the reference line (L1) that obliquely intersects the bead base line and is in contact with the rim (R), is adopted, good stability is obtained. From this point of view, the ratio is preferably 0.6 or more and more preferably 0.70 or more. From the point of view that the influence on the absorbability is suppressed, the ratio is preferably 1.25 or less, and more preferably 1.00 or less, and even more preferably 0.80 or less.

In this way, in the tire 20, in the reference zone, by adopting the side surface 52, which extends along the reference line that is inclined with respect to the axial direction and is in contact with the rim (R), improvement in the absorbability is achieved while the stability is properly maintained. By adopting the apex 40 having an appropriate height, the stability can be further improved. The side surface 52 and the apex 40 synergistically improve both the stability and the absorbability. In the tire 20, both good stability and good absorbability are achieved. According to an embodiment of the present invention, the pneumatic tire 20 for a two-wheeled vehicle that allows both good stability and good absorbability to be achieved can be obtained.

In Fig. 2, a double-headed arrow (WC) indicates an axial direction width of the bottom 42 of the apex 40. A solid line (L3) is a straight line extending along the axial direction. A double-headed arrow (H3) indicates a radial direction distance from the outer edge 44 of the apex 40 to the straight line (L3). In the present application, the distance (H3) is 3 mm. A double-headed arrow (WS) indicates an axial direction width of the apex 40 measured along the straight line (L3). The width (WS) is an axial direction width of the apex 40 at a position 3 mm away from the outer edge 44 of the apex 40 on a radial direction inner side.

In the tire 20, the apex 40 is configured such that the outer edge 44 of the apex 40 is positioned at a radial direction outer side portion of the reference zone. As described above, the side part 56 of the tire 20 has the side surface 52, which extends along the reference line that is inclined with respect to the axial direction and is in contact with the rim (R). In the side part 56, when the axial direction width of the apex 40 at the outer edge 44 portion is configured to be the same as that of the conventional tire 2, the apex 40 has a surprisingly large influence on the rigidity of the radial direction outer side portion of the reference zone.

In the tire 20, it is preferable that a ratio of the width (WS) with respect to the width (WC) be 0.25 or less. As a result, the apex 40 having the small axial direction width (WS) is obtained. In the tire 20, the influence due to the apex 40 on the rigidity of the radial direction outer side portion of the reference zone is sufficiently suppressed. In the tire 20, good absorbability is maintained. From this point of view, it is preferable that the ratio is 0.20 or less.

In the tire 20, it is preferable that the ratio of the width (WS) with respect to the width (WC) be 0.1 or more. As a result, the outer edge 44 portion of the apex 40 effectively contributes to the rigidity of the radial direction outer side portion of the reference zone. In the tire 20, good stability is maintained. From this point of view, it is preferable that the ratio is 0.15 or more.

As described above, the apex 40 is formed of a high-hardness crosslinked rubber. The apex 40 contributes to the rigidity of the side part 56.

In the tire 20, it is preferable that a complex elastic modulus (E*) of the apex 40 measured at a temperature of 70 °C be 12 MPa or more. The apex 40 effectively reinforces the side part 56. The tire 20 is even more excellent in stability. It is preferable that the complex elastic modulus (E*) be 30 MPa or less. As a result, the influence due to the apex 40 on the rigidity is suppressed. In the tire 20, good absorbability is maintained. The apex 40 having the complex elastic modulus (E*) of 12 MPa or more and 30 MPa or less measured at a temperature of 70 °C contributes even more in achieving both good stability and good absorbability.

In an embodiment of the present invention, the above-described complex elastic modulus (E*) is measured in accordance with provisions of the "JISK6394" under the following measurement conditions using a viscoelasticity spectrometer ("VESF-3" manufactured by IWAMOTO SEISAKUSHO Co., LTD.). In the measurement, a platelike test specimen (length = 45 mm, width = 4 mm, and thickness = 2 mm) from a rubber composition of the apex 40 is formed. The test specimen is used in the measurement.
Initial Strain: 10%
Amplitude: ±2.0%
Frequency: 10Hz
Deformation Mode: Tension
Measurement Temperature: 70 °C

In Fig. 2, a double-headed arrow (HF) indicates a radial direction height from the reference position (PR) to the edge of the folding-back part.

As described above, in the tire 20, the edge of the folding-back part 50 is positioned close to the edge (PT) of the tread surface 34 in the radial direction. The folding-back part 50 contributes to the rigidity of the side part 56. From a point of view that the folding-back part can contribute to the flexible flexure of the side part and can further improve the stability and the absorbability, it is preferable that a ratio of the height (HF) with respect to the height (HS) be 0.6 or more and 1.3 or less.

### Examples

In the following, effects according to an embodiment of the present invention are made clear by examples. However, the present invention should not be construed as being limited based on descriptions of the examples.

### Example 1

A tire illustrated in Fig. 1 - 3 was manufactured. The tire has a size of 180/55ZR17. In an example 1, the intersection angle (θ) of the reference line (L1) is 60 degrees. The ratio ((HA)/(HS)) of the radial direction height (HA) from the reference position (PR) to the outer edge of the apex, with respect to the radial direction height (HS) from the reference position (PR) to the edge (PT) of the tread surface is 0.75. The ratio ((WS)/(WC)) of the axial direction width (WS) of the apex at the position 3 mm away from the outer edge of the apex on the radial direction inner side, with respect to the axial direction width (WC) of the bottom of the apex, is 0.17. The complex elastic modulus (E*) of the apex measured at the temperature of 70 °C is 12 MPa.

### Example 3 and Comparative Example 1 and 2

Tires of Example 3 and Comparative Example 1 and 2 were obtained in the same manner as in Example 1 except that the angle (θ) and the ratio ((HA)/(HS)) were set as in the following Table 1.

### Example 2 and 4 - 6 and Comparative Example 3

Tires of Example 2 and 4-6 and Comparative Example 3 were obtained in the same manner as in Example 1 except that the ratio ((HA)/(HS)) was set as in the following Table 1 and 2.

### Example 7 - 10 and Comparative Example 4 and 5

Tires of Example 7-10 and Comparative Example 4 and 5 were obtained in the same manner as in Example 1 except that the angle (θ) was set as in the following Table 3.

### Example 11 - 14

Tires of Example 11 - 14 were obtained in the same manner as in Example 1 except that the ratio ((WS)/(WC)) was set as in the following Table 4.

### Example 15 - 17

Tires of Example 15 - 17 were obtained in the same manner as in Example 1 except that the elastic modulus (E*) was set as in the following Table 5.

### Stability

Each of the prototype tires was mounted to a rear wheel (rim size -= 17 M/C × MT 5.50) of a two-wheeled vehicle (4 cycles) that has a displacement of 1300 cc, and was filled with air such that an internal pressure thereof was 290 kPa. A commercially available tire (size = 120/70ZR17) was mounted to a front wheel (rim size = 17 M/C × MT 3.50), and was filled with air such that an internal pressure thereof was 250 kPa. The two-wheeled vehicle was run on a circuit course having an asphalt road surface, and sensory evaluation was performed by a rider. An evaluation item is stability. The results are presented in the following Tables 1 - 5 as index values with a score of 5.0 as a perfect score. A larger value indicates a better stability. Comparative Example 2 was used as a reference to determine presence or absence of an effect.

### Absorbability

Each of the prototype tires was mounted to a normal rim (rim size = 17 M/C × MT 5.50) and was filled with air such that an internal pressure thereof was 290 kPa. The tire was mounted to a flat-belt type tire six-component force measuring device. A vertical load of 1.3 kN was loaded on the tire. The tire was run at a speed of 15 km/h on a road surface on which projections (size = height of 5 mm × width of 5 mm) were provided. A reactive force that occurred when the tire rode over a projection was observed, and a time period from when the reactive force occurred to when the reactive force vanished was measured. The results are presented in the following Table 1 - 5 as index values with a value of Comparative Example 2 being 100. A larger value indicates a better absorbability.
Table 1

**Table 1: Evaluation Results**

| | Comparative Example 1 | Comparative Example 2 | Example 1 | Example 2 | Example 3 |
|---|---|---|---|---|---|
| Angle (θ) [degree] | 40 | 80 | 60 | 60 | 75 |
| Ratio ((HA)/(HS)) [-] | 0.25 | 0.25 | 0.75 | 0.50 | 0.50 |
| Ratio ((WS)/(WC)) [-] | 0.17 | 0.17 | 0.17 | 0.17 | 0.17 |
| Elastic Modulus (E*) [MPa] | 12 | 12 | 12 | 12 | 12 |
| Stability | 2.0 | 3.0 | 4.5 | 3.5 | 4.0 |
| Absorbability | 110 | 100 | 115 | 110 | 105 |

Table 2

**Table 2: Evaluation Results**

| | Comparative Example 3 | Example 4 | Example 5 | Example 6 |
|---|---|---|---|---|
| Angle (θ) [degree] | 60 | 60 | 60 | 60 |
| Ratio ((HA)/(HS)) [-] | 0.40 | 0.70 | 0.80 | 1.25 |
| Ratio ((WS)/(WC)) [-] | 0.17 | 0.17 | 0.17 | 0.17 |
| Elastic Modulus (E*) [MPa] | 12 | 12 | 12 | 12 |
| Stability | 3.0 | 4.5 | 4.5 | 4.5 |
| Absorbability | 100 | 115 | 115 | 110 |

Table 3

**Table 3: Evaluation Results**

| | Comparative Example 4 | Example 7 | Example 8 | Example 9 | Example 10 | Comparative Example 5 |
|---|---|---|---|---|---|---|
| Angle (θ) [degree] | 40 | 45 | 55 | 65 | 75 | 80 |
| Ratio ((HA)/(HS)) [-] | 0.75 | 0.75 | 0.75 | 0.75 | 0.75 | 0.75 |
| Ratio ((WS)/(WC)) [-] | 0.17 | 0.17 | 0.17 | 0.17 | 0.17 | 0.17 |
| Elastic Modulus (E*) [MPa] | 12 | 12 | 12 | 12 | 12 | 12 |
| Stability | 2.5 | 3.5 | 4.5 | 4.5 | 4.0 | 3.5 |
| Absorbability | 115 | 115 | 115 | 115 | 110 | 85 |

Table 4

**Table 4: Evaluation Results**

| | Example 11 | Example 12 | Example 13 | Example 14 |
|---|---|---|---|---|
| Angle (θ) [degree] | 60 | 60 | 60 | 60 |
| Ratio ((HA)/(HS)) [-] | 0.75 | 0.75 | 0.75 | 0.75 |
| Ratio ((WS)/(WC)) [-] | 0.10 | 0.15 | 0.20 | 0.25 |
| Elastic Modulus (E*) [MPa] | 12 | 12 | 12 | 12 |
| Stability | 4.0 | 4.5 | 4.5 | 4.0 |
| Absorbability | 115 | 115 | 115 | 105 |

Table 5

**Table 5: Evaluation Results**

| | Example 15 | Example 16 | Example 17 |
|---|---|---|---|
| Angle (θ) [degree] | 60 | 60 | 60 |
| Ratio ((HA)/(HS)) [-] | 0.75 | 0.75 | 0.75 |
| Ratio ((WS)/(WC)) [-] | 0.17 | 0.17 | 0.17 |
| Elastic Modulus (E*) [MPa] | 10 | 30 | 40 |
| Stability | 4.0 | 4.5 | 4.5 |
| Absorbability | 115 | 115 | 110 |

As indicated in Table 1 - 5, the tires of the examples are more highly evaluated than the tires of the comparative examples. From the results of the evaluation, the advantages according to an embodiment of the present invention are clear.

The above-described tire can also be applied to various types of two-wheeled vehicles.

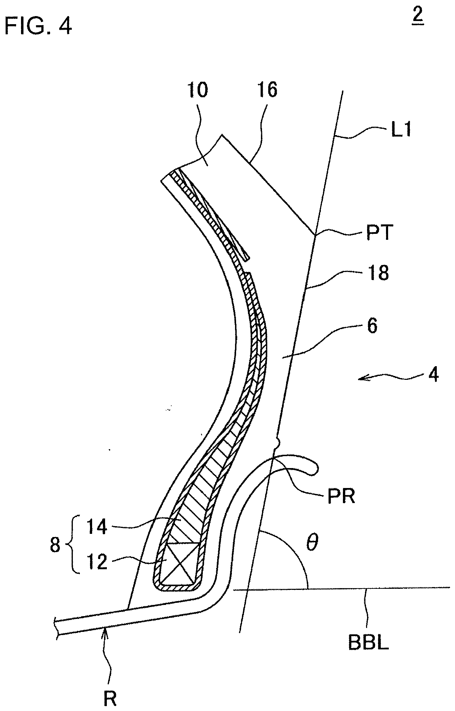

Fig. 4 illustrates a cross section of conventional pneumatic tire 2. A side part 4 of the tire 2 is illustrated in Fig. 4. The tire 2 is mounted to a rim (R). The tire 2 is for a two-wheeled vehicle. A side wall 6 and a bead 8 are included in the side part 4.

The side wall 6 is formed of a crosslinked rubber. The side wall 6 extends from a tread 10 substantially inward in a radial direction. The side wall 6 is soft. The side wall 6 contributes to flexure of the side part 4.

The bead 8 includes a core 12 and an apex 14. The apex 14 extends from the core 12 outward in the radial direction. The apex 14 is formed of a high-hardness crosslinked rubber. The apex 14 suppresses deformation of the side part 4.

The side part 4 contributes to support of a vehicle body. When rigidity of the side part 4 is too low, the tire 2 lacks stability. When the rigidity of the side part 4 is too high, absorbability is reduced.

A tread surface 16 of the tire 2 for a two-wheeled vehicle has a smaller curvature radius as compared to that that of a tire for a passenger car. In a two-wheeled vehicle, a ground-contact state of the tire 2 significantly varies depending on straight traveling or turning. Therefore, the rigidity of the side part 4 is extremely important. In order to achieve both good stability and good absorbability, various studies have been made regarding the rigidity of the side part 4.

As illustrated in Fig. 4, a portion of the tire 2 is in contact with the rim (R). In Fig. 4, a reference numeral symbol PT indicates an edge of the tread surface 16. A reference numeral symbol PR indicates a radial direction outer edge of a surface in contact with the rim (R). A straight line indicated by a reference numeral symbol L1 is a reference line passing through the edge (PT) and the outer edge (PR).

In the tire 2, in a zone between the edge (PT) and the outer edge (PR), an outer surface of the side part 4, that is, a side surface 18 is along the reference line (L1). The side surface 18 in this zone has a shape of a straight line. An angle (θ) formed by the reference line (L1) with respect to a bead base line is in a range of 80 - 90 degrees. The side surface 18 in this zone extends substantially in the radial direction.

Due to action of a load, the tire 2 flexes. In this case, a force in a compression direction acts on the side part 4. As illustrated in Fig. 4, the reference line (L1) intersects the rim (R). In other words, the side surface 18 is placed on the rim (R) at the outer edge (PR). The side surface 18 acts to resist the force in the compression direction. The side surface 18 extends substantially in the radial direction and thus effectively reinforces the side part 4. However, it is difficult for the side part 4 having the side surface 18 to flex. The tire 2 is superior in stability but is poor in absorbability.

From a point of view of reinforcing the side part 4, a harder apex 14 can be adopted. The apex 14 contributes to the stability. However, the apex 14 inhibits the absorbability. When an axial direction width of the apex 14 is reduced, the absorbability can be improved to some extent. However, a sufficient absorbability cannot be obtained. By only adopting the apex 14 that is hard and has a small axial direction width, it is difficult to achieve both good stability and good absorbability.

From a point of view of reinforcing the side part 4, an apex 14 having a large radial direction height can be adopted. The apex 14 contributes to the stability. However, the apex 14 inhibits the absorbability. When an axial direction width of the apex 14 is reduced, the absorbability can be improved to some extent. However, a sufficient absorbability cannot be obtained. By only adopting the apex 14 that has a large radial direction height and a small axial direction width, it is difficult to achieve both good stability and good absorbability.

A pneumatic tire for a two-wheeled vehicle according to an embodiment of the present invention achieves both good stability and good absorbability.

A pneumatic tire for a two-wheeled vehicle according to an embodiment of the present invention includes a tread, a pair of side walls and a pair of beads. The tread has a tread surface. The side walls each extend from the tread substantially inward in a radial direction. The beads are respectively positioned on inner sides of the side walls in an axial direction. The beads each include a core and an apex. The apex extends from the core outward in the radial direction. An outer surface of the tire includes the tread surface and a pair of side surfaces. The side surfaces respectively extend from edges of the tread surface substantially inward in the radial direction. In a state in which the tire is mounted to a normal rim and is filled with air such that the tire has a normal internal pressure, a portion on each of the side surfaces is in contact with the normal rim. When a position on each of the side surfaces corresponding to a radial direction outer edge of the contact surface is a reference position and a straight line passing through the reference position and an edge of the tread surface is a reference line, the reference line is in contact with the normal rim at the reference position. In a zone between the edge of the tread surface and the reference position, the side surface extends along the reference line. An absolute value of an angle formed by the reference line with respect to a bead base line is 45 degrees or more and 75 degrees or less. A ratio of a radial direction height from the reference position to an outer edge of the apex, with respect to a radial direction height from the reference position to the edge of the tread surface, is 0.5 or more.

Preferably, in the pneumatic tire for a two-wheeled vehicle, the apex tapers from a bottom toward an outer edge. A ratio of an axial direction width of the apex at a position 3 mm away from the outer edge of the apex on a radial direction inner side, with respect to an axial direction width of the bottom of the apex, is 0.1 or more and 0.25 or less.

Preferably, in the pneumatic tire for a two-wheeled vehicle, the apex has a complex elastic modulus (E*) of 12 MPa or more.

In a pneumatic tire for a two-wheeled vehicle according to an embodiment of the present invention, in the zone between the edge of the tread surface and the reference position, the side surface extends along the reference line that obliquely intersects the bead base line and is in contact with the normal rim. The side surface contributes to flexure. The tire is excellent in absorbability. In addition, in the tire, the apex has an appropriate height. The apex contributes to the stability. In the tire, both good stability and good absorbability are achieved. A pneumatic tire for a two-wheeled vehicle according to an embodiment of the present invention allows both good stability and good absorbability to be achieved.

Obviously, numerous modifications and variations of the present invention are possible in light of the above teachings. It is therefore to be understood that within the scope of the appended claims, the invention may be practiced otherwise than as specifically described herein.

A pneumatic tire for a two-wheeled vehicle includes a tread, side walls, and beads. When the tire is on normal rim and filled to normal internal pressure, each side surface has reference position corresponding to radial direction outer edge of each side surface in contact with the rim, and reference line passing through the reference position and edge of the tread surface such that the reference line is in contact with the rim at the reference position and each side surface extends along the reference line between the reference position and edge of the tread surface, absolute value of angle formed by the reference line and bead base line is from 45 to 75 degrees, and ratio of radial direction height from the reference position to outer edge of the apex, to radial direction height from the reference position to the edge of the tread surface, is 0.5 or more.

## Claims

1. A pneumatic tire **(20)** for a two-wheeled vehicle, comprising:
a tread **(22)** having a tread surface **(34);**
a pair of side walls **(24)** extending from the tread **(22)** substantially inward in a radial direction such that the pair of side walls **(24)** has a pair of side surfaces extending from edges of the tread surface **(34)** substantially inward in the radial direction, respectively; and
a pair of beads **(26)** positioned on inner sides of the side walls **(24)** in an axial direction, respectively, and each comprising a core **(12)** and an apex **(14)** extending from the core **(12)** outward in the radial direction,
**characterized in that**
when the pneumatic tire **(20)** is mounted on a normal rim **(R)** and is filled with air to a normal internal pressure, each of the side surfaces has a reference position **(PR)** which corresponds to a radial direction outer edge of each of the side surfaces in contact with the normal rim **(R),** and a reference line (**L1**) which is a straight line passing through the reference position **(PR)** and an edge **(PT)** of the tread surface **(34)** such that the reference line (**L1**) is in contact with the normal rim **(R)** at the reference position **(PR)** and that each of the side surfaces extends along the reference line (**L1**) in a zone between the reference position **(PR)** and a respective one of the edges of the tread surface **(34),** and the pneumatic tire **(20)** satisfies that an absolute value of an angle formed by the reference line (**L1**) with respect to a bead base line is in a range of 45 degrees to 75 degrees and that a ratio of a radial direction height from the reference position **(PR)** to an outer edge of the apex **(14),** with respect to a radial direction height from the reference position **(PR)** to the edge **(PT)** of the tread surface **(34),** is 0.5 or more.

2. The pneumatic tire **(20)** for a two-wheeled vehicle according to claim 1, wherein
each of the beads **(26)** is formed such that the apex **(14)** is tapering from a bottom toward an outer edge and has a ratio (**(WS)/(WC)**) of an axial direction width (**WS**) at a position 3 mm away from the outer edge of the apex **(14)** on a radial direction inner side, with respect to an axial direction width **(WC)** of the bottom of the apex **(14),** which is in a range of 0.1 to 0.25.

3. The pneumatic tire **(20)** for a two-wheeled vehicle according to Claim 1, wherein the apex **(14)** has a complex elastic modulus E* of 12 MPa or more.

4. The pneumatic tire **(20)** for a two-wheeled vehicle according to Claim 2, wherein the apex **(14)** has a complex elastic modulus E* of 12 MPa or more.

## Patentansprüche

1. Luftreifen (20) für ein zweirädriges Fahrzeug, der Folgendes aufweist:
eine Lauffläche (22) mit einer Laufflächenoberfläche (34);
ein Paar von Seitenwänden (24), die sich von der Lauffläche (22) im Wesentlichen einwärts in einer radialen Richtung erstrecken, sodass das Paar von Seitenwänden (24) ein Paar von Seitenflächen hat, die sich jeweils von Rändern der Laufflächenoberfläche (34) im Wesentlichen in der radialen Richtung einwärts erstrecken; und
ein Paar von Wülsten (26), die jeweils an Innenseiten der Seitenwände (24) in einer axialen Richtung positioniert sind und jeweils einen Kern (12) und einen Apex (14) aufweisen, der sich von dem Kern (12) in der radialen Richtung auswärts erstreckt,
**dadurch gekennzeichnet, dass**
dann, wenn der Luftreifen (20) auf einer normalen Felge (R) montiert ist und mit Luft bei einem normalen Innendruck gefüllt ist, jede von den Seitenflächen eine Referenzposition (PR), die einem radialrichtungsäußeren Rand von jeder von den Seitenflächen entspricht, in Kontakt mit der normalen Felge (R) hat, und eine Referenzlinie (L1), welche eine gerade Linie ist, die durch die Referenzposition (PR) und einen Rand (PT) der Laufflächenoberfläche (34) hindurchführt, so dass die Referenzlinie (L1) mit der normalen Felge (R) an der Referenzposition (PR) in Kontakt ist und dass jede von den Seitenflächen sich entlang der Referenzlinie (L1) in einer Zone zwischen der Referenzposition (PR) und einem entsprechenden von den Rändern der Laufflächenoberflächen (34) erstreckt, und der Luftreifen (20) erfüllt, dass ein Absolutwert eines Winkels, der durch die Referenzlinie (L1) bezüglich einer Wulstbasislinie ausgebildet ist, in einem Bereich von 45 Grad bis 75 Grad ist und dass ein Verhältnis einer Radialrichtungshöhe von der Referenzposition (PR) zu einem äußeren Rand des Apex (14) hinsichtlich einer Radialrichtungshöhe von der Referenzposition (PR) zu dem Rand (PT) der Laufflächenoberfläche (34) 0,5 oder mehr ist.

2. Luftreifen (20) für ein zweirädriges Fahrzeug nach Anspruch 1, wobei jede von dem Wülsten (26) derart ausgebildet ist, dass sich der Apex (14) von einem Boden zu einem äußeren Rand verjüngt und ein Verhältnis ((WS)/(WC)) einer Axialrichtungsbreite (WS) an einer Position 3 mm entfernt von dem äußeren Rand des Apex (14) auf einer radialrichtungsinneren Seite hinsichtlich einer Axialrichtungsbreite (WC) des Bodens des Apex (14) hat, das in einem Bereich von 0,1 bis 0,25 ist.

3. Luftreifen (20) für ein zweirädriges Fahrzeug nach Anspruch 1, wobei der Apex (14) einen komplexen E-Modul E* von 12 MPa oder mehr hat.

4. Luftreifen (20) für ein zweirädriges Fahrzeug nach Anspruch 2, wobei der Apex (14) einen komplexen E-Modul E* von 12 MPa oder mehr hat.

## Revendications

1. Pneumatique (20) pour un véhicule à deux roues, comprenant :
une bande de roulement (22) ayant une surface de bande de roulement (34) ;
une paire de parois latérales (24) s'étendant à partir de la bande de roulement (22) sensiblement vers l'intérieur dans une direction radiale de sorte que la paire de parois latérales (24) a une paire de surfaces latérales s'étendant à partir des bords de la surface de bande de roulement (34) sensiblement vers l'intérieur dans la direction radiale, respectivement ; et
une paire de talons (26) positionnés sur les côtés internes des parois latérales (24) dans une direction axiale, respectivement, et chacun comprenant un noyau (12) et un sommet (14) s'étendant à partir du noyau (12) vers l'extérieur dans la direction radiale, **caractérisé en ce que** :
lorsque le pneumatique (20) est monté sur une jante normale (R) et est rempli avec de l'air à une pression interne normale, chacune des surfaces latérales a une position de référence (PR) qui correspond à un bord externe de direction radiale de chacune des surfaces latérales en contact avec la jante normale (R), et une ligne de référence (L1) qui est une ligne droite passant par la position de référence (PR) et un bord (PT) de la surface de bande de roulement (34) de sorte que la ligne de référence (L1) est en contact avec la jante normale (R) dans la position de référence (PR) et **en ce que** chacune des surfaces latérales s'étend le long de la ligne de référence (L1) dans une zone entre la position de référence (PR) et un bord respectif des bords de la surface de bande de roulement (34), et le pneumatique (20) satisfait qu'une valeur absolue d'un angle formé par la ligne de référence (L1) par rapport à la ligne de base de talon est dans une plage de 45 degrés à 75 degrés et **en ce qu'**un rapport de la hauteur de direction radiale de la position de référence (PR) jusqu'au bord externe du sommet (14), par rapport à une hauteur de direction radiale de la position de référence (PR) jusqu'au bord (PT) de la surface de bande de roulement (34), est de 0,5 ou plus.

2. Pneumatique (20) pour un véhicule à deux roues selon la revendication 1, dans lequel :
chacun des talons (26) est formé de sorte que le sommet (14) se rétrécit progressivement à partir d'un fond vers un bord externe et a un rapport ((WS)/(WC)) d'une largeur de direction axiale (WS) dans une position à 3 mm du bord externe du sommet (14) sur un côté interne de direction radiale, par rapport à une largeur de direction axiale (WC) du fond du sommet (14), qui est dans une plage de 0,1 à 0,25.

3. Pneumatique (20) pour un véhicule à deux roues selon la revendication 1, dans lequel le sommet (14) a un module d'élasticité complexe E* de 12 MPa ou plus.

4. Pneumatique (20) pour un véhicule à deux roues selon la revendication 2, dans lequel le sommet (14) a un module d'élasticité complexe E* de 12 MPa ou plus
